Europäisches Patentamt

(19) European Patent Office

Office européen des brevets

(11) Numéro de publication: **0 104 119**
**B1**

(12) **FASCICULE DE BREVET EUROPEEN**

(45) Date de publication du fascicule du brevet:
28.01.87

(21) Numéro de dépôt: **83401816.0**

(22) Date de dépôt: **16.09.83**

(51) Int. Cl.⁴: **B 23 P 19/04, B 21 D 47/00**

(54) **Procédé et dispositif d'assemblage de plaquettes de grilles.**

(30) Priorité: **16.09.82 FR 8215662**

(43) Date de publication de la demande:
**28.03.84 Bulletin 84/13**

(45) Mention de la délivrance du brevet:
**28.01.87 Bulletin 87/5**

(84) Etats contractants désignés:
**BE DE GB IT SE**

(56) Documents cités:
**DE - A - 2 736 139**
**DE - B - 1 262 749**
**FR - A - 1 592 605**

(73) Titulaire: **COGEMA et FRAMATOME (Société en nom collectif), 2, rue Paul Dautier, F-78140 Velizy Villacoublay (FR)**

(72) Inventeur: **Vere, Bernard, 2, les Chusets Brie et Angonne, F-38320 Eybens (FR)**
Inventeur: **Biryoukoff, Maura, Allée du Mathias, F-69760 Limonest (FR)**
Inventeur: **Mathevon, Paul, Avenue Achile Maucuer, F-84500 Bollene (FR)**

(74) Mandataire: **Fort, Jacques et al, CABINET PLASSERAUD 84, rue d'Amsterdam, F-75009 Paris (FR)**

## Description

La présente invention concerne l'assemblage de plaquettes pour constituer une grille du genre utilisé dans les assemblages de combustible de réacteurs nucléaires, grilles ayant pour but de retenir les crayons de combustible de l'assemblage suivant un réseau régulier.

L'invention a plus particulièrement pour objet un procédé et un dispositif permettant d'assembler des plaquettes individuelles suivant deux directions orthogonales, de façon précise, en évitant toute erreur dans la répartition des plaquettes, avant soudage de ces dernières pour les solidariser de façon définitive.

A l'heure actuelle, on assemble manuellement les plaquettes suivant un processus qui est lent, exige un personnel très compétent et ne garantit pas une géométrie parfaitement régulière. Les étapes de ce procédé sont les suivantes: un opérateur dispose un premier jeu de plaquettes parallèlement les unes aux autres dans les rainures d'un gabarit. Une fois réalisée cette opération, que l'on peut assimiler à la mise en place des fils de chaîne dans l'industrie textile, l'opérateur dispose, une à une, les plaquettes constituant un second jeu, que l'on peut assimiler à la trame d'un tissu. Pour permettre cet assemblage, chacune des plaquettes du premier jeu comporte des fentes coopérant avec des fentes complémentaires des plaquettes du second jeu pour permettre un encastrement à mi-fer.

Une fois toutes les plaquettes en place, un second gabarit possédant des rainures identiques à celles du premier est placé sur les deux jeux de grilles pour maintenir l'entrecroisement lors des séquences ultérieures de finition de la grille, constituées par la mise en place de quatre plaquettes extérieures d'encadrement et le soudage.

En dépit du fait que l'opérateur peut apprécier, par son sens du toucher, les efforts d'insertion qu'il exerce sur les plaquettes du second jeu, il peut se produire des déformations locales du fait en particulier que les plaquettes du premier jeu ne sont pas maintenues de façon précise au cours de l'insertion des secondes et qu'il peut s'ensuivre des défauts d'alignement des fentes recevant une même plaquette du second jeu. De plus, dans le cas fréquent de grilles dont toutes les plaquettes ne sont pas identiques, il existe un risque non négligeable d'erreur dans le choix de la plaquette à placer à un endroit donné. On connaît déjà (DE-B-1262 749) un procédé d'assemblage conforme au préambule de la revendication 1, destiné à former des croisillons en bandes de papier. On connaît également (FR-A-1 592 605) un dispositif d'assemblage dans lequel les cloisons d'un premier jeu sont mises en place très approximativement en les plantant sur des picots portés par une courroie transporteuse. Il n'est pas prévu de gabarit muni de fentes de réception des parties terminales des plaquettes. Les plaquettes du second jeu sont insérées en les forçant vers le bas à partir d'un panier magasin.

Le déplacement vers le bas est simplement provoqué par une lame actionnée par un vérin et il n'y a aucun quidage. Dans le brevet DE 1 262 749, les picots portés par une bande transporteuse sont remplacés par des pinces portées par une plaque. Mais il n'est toujours prévu aucun guidage des cloisons soit au cours de leur descente vers les pinces, soit vers les cloisons déjà en place. En conséquence, les procédés et dispositifs de l'art antérieur ne permettent pas une mise en place précise et rien ne suggère d'adjoindre, aux éléments décrits dans les deux documents, les éléments supplémentaires nécessaires pour atteindre une précision élévée.

La présente invention vise à fournir un procédé et un dispositif d'assemblage répondant mieux que ceux antérieurement connus aux exigence de la pratique, notamment en ce qu'ils écartent, ou du moins atténuent dans une large mesure, les inconvénients ci-dessus. Plus particulièrement, l'invention vise à fournir un procédé et un dispositif permettant de garantir une géométrie exacte constante et précise de l'assemblage.

Dans ce but, l'invention propose un procédé d'assemblage suivant la partie caractérisante de la revendication 1. Un dispositif suivant un autre aspect de l'invention permettant de mettre en oeuvre ce procédé comprend un châssis, un chariot déplaçable sur le châssis suivant une première direction, avantageusement verticale, un cadre formant gabarit solidaire du chariot, un équipage déplaçable sur le châssis dans une direction orthogonale à la direction de déplacement du chariot et parallèle aux fentes des plaquettes, équipage comportant une table munie de moyens de réception et de centrage d'une plaquette du second jeu et des moyens permettant de retenir le cadre dans des positions successives prédéterminées pour lesquelles les fentes correspondantes des plaquettes du premier jeu font face au trajet de la plaquette du second jeu porté par l'équipage mobile.

L'invention sera mieux comprise à la lecture de la description qui suit d'un mode d'exécution de l'invention, donné à titre d'exemple non limitatif. La description se réfère aux dessins qui l'accompagnent, dans lesquels:

– la figure 1 est une vue en perspective montrant un fragment d'une grille à laquelle est susceptible de s'appliquer l'invention;

– la figure 2 est une vue de détail à grande échelle, montrant un fragment d'une des plaquettes de la grille de la figure 1;

– la figure 3 est une vue simplifiée, en élévation, d'un dispositif suivant l'invention, certaines pièces étant enlevées pour plus de clarté;

– la figure 4 est une vue en coupe suivant la ligne IV-IV de la figure 3;

– les figures 5 et 6 montrent un peigne appartenant au dispositif des figures 3 et 4, respectivement en vue de dessus et en coupe suivant la ligne VI-VI de la figure 5;

– les figures 7 et 8 montrent une table faisant partie du dispositif des figures 3 et 4, respectivement en vue de dessus et en coupe avec le couvercle soulevé.

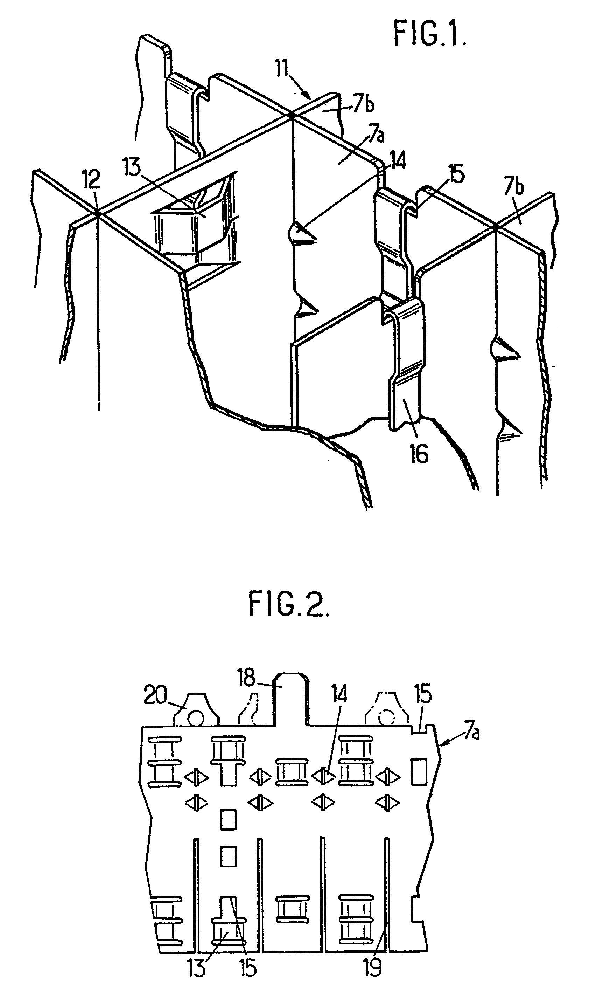

Bien que l'invention soit susceptible de s'appliquer à des grilles de types très différents, on fera référence par la suite à une grille dont la partie interne est du genre montré en figure 1. Cette grille 11 est constituée par l'entrecroisement de plaquettes 7a appartenant à un premier jeu et 7b appartenant à un second jeu, assemblées à mi-fer et soudées en leurs points de croisement 12. Ces plaquettes, en alliage de zirconium par exemple, sont constituées par des bandes dans lesquelles sont pratiqués des bossage 13, des bossettes ou indentations de guidage 14 et des échancrures 15. Ces échancrures 15 sont prévues pour recevoir des ressorts rapportés 16 (figure 1) destinés à appliquer les crayons de combustible adjacents (non représentés) contre les bossages en regard 13. L'invention est évidemment tout aussi applicable à des grilles dans lesquelles les ressorts rapportés 16 sont remplacés par des portions estampées restant d'une seule pièce avec les plaquettes elles-mêmes. Sur la figure 2, on voit également des excroissances supplémentaires faisant saillie de l'arête de la plaquette 7a opposée à celle à partir de laquelle sont ménagées les fentes 19 d'assemblage: ces excroissances comportent par exemple des languettes 18 de fixation de la grille à des tubes guides, faisant partie du squelette de l'assemblage de combustible, et des ailettes 20.

Chacune des plaquettes 7a est susceptible de s'engager à mi-fer dans des plaquettes complémentaires 7b, pourvues de fentes allant également jusqu'à la moitié de la largeur de la plaquette. L'engagement est guidé par les bossettes 14 de façon, entre autres, à assurer une géométrie régulière.

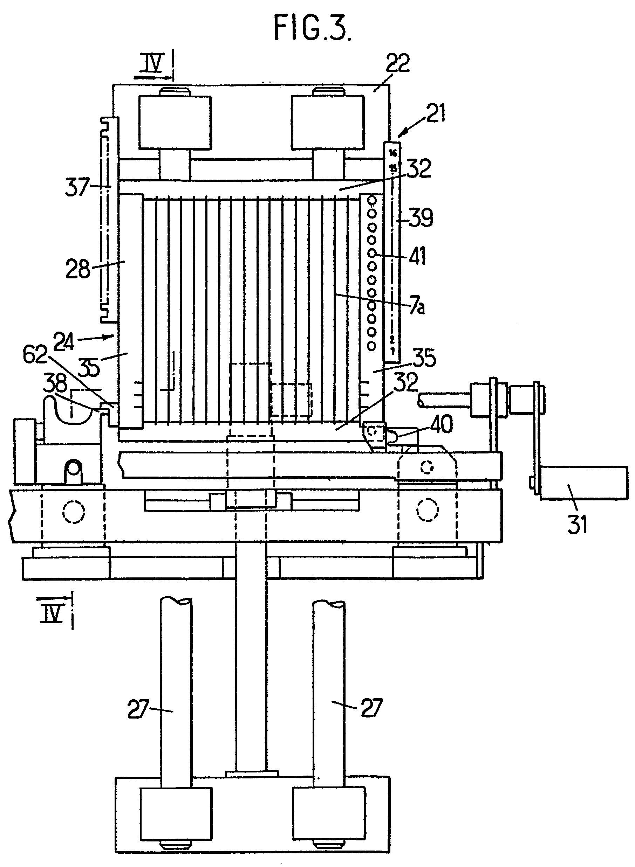

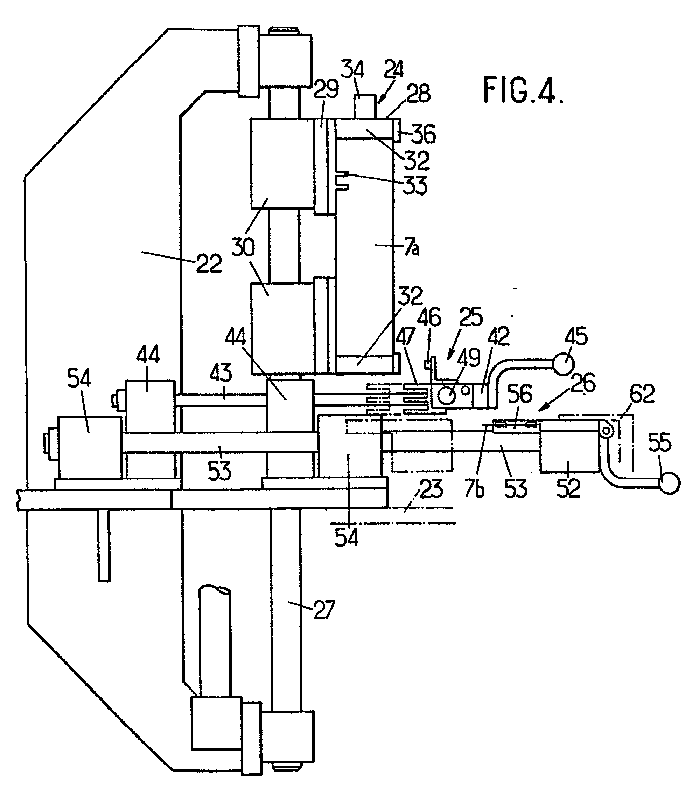

On décrira maintenant un dispositif suivant l'invention permettant d'effectuer l'assemblage. Ce dispositif, représenté dans son ensemble en figures 3 et 4, peut être regardé comme comprenant:

– un châssis 22, destiné à être solidarisé d'un plan de travail 23, montré très schématiquement en figure 4,

– un ensemble 24 de maintien et de déplacement des plaquettes du premier jeu, permettant de déplacer les plaquettes par rapport au châssis dans le sens de leur longueur,

– un ensemble 25 de positionnement fin des plaquettes du premier jeu,

– un ensemble 26 d'introduction des plaquettes du second jeu.

Ce dispositif fera généralement partie d'un poste d'assemblage de grilles qui comporte également un mécanisme de distribution des plaquettes, présentant successivement à l'opérateur toutes les plaquettes dans leur ordre d'insertion pour éviter les erreurs. Ce mécanisme peut être constitué par une noria ayant des bacs en nombre égal à celui des plaquettes, munie de moyens d'avance pas à pas pour présenter les plaquettes dans l'ordre requis. Le poste d'assemblage comportera, en aval du dispositif 21, un emplacement où les plaquettes intérieures assemblées reçoivent quatre plaquettes supplémentaires extérieures constituant une ceinture périphérique, avant soudage.

Le châssis 22 est constitué d'équerres portant deux arbres verticaux 27 formant glissières et le mécanisme d'entraînement de l'ensemble de maintien 24. Cet ensemble 24 comporte un cadre 28 monté sur un chariot 29 guidé par quatre douilles à billes 30 montées sur les glissières 27. Le chariot est entraîné par un ensemble vis-écrou ou viscrémaillère entraîné, dans le mode de réalisation représenté, par une manivelle 31. Au lieu de manivelle, on pourrait évidemment utiliser un moteur, notamment du type pas-à-pas.

Le cadre 28 est destiné au maintien des plaquettes 7a du premier jeu. Pour cela, les côtés haut et bas 32 du cadre 28 sont munis de fentes de guidage qui reçoivent les parties terminales des plaquettes 7a. Le fond du cadre est muni de butées 33 (figure 4) contre lesquelles viennent s'appuyer les parties des plaquettes 7a démunies d'aillettes 20 et de languettes 18. Entre les butées subsistent les espaces dans lesquels peuvent se loger les ailettes et languettes.

Le cadre 28 étant disposé verticalement, le côté inférieur 32 sert de surface de référence pour aligner les plaquettes 7a. Le côté supérieur 32 est muni d'un presseur élastique 34 maintenant les plaquettes 7a en appui sur le côté inférieur, avec une force qui reste suffisamment faible pour ne pas provoquer le flambage des plaquettes. Le cadre est complété par des côtés gauche et droit 35 également munis de fentes de réception de plaquettes. Des barrettes 36 munies d'un dispositif de serrage rapide permettent de maintenir les plaquettes 7a contre les butées 33 une fois les plaquettes du premier jeu placées.

Le côté gauche 35 du cadre 28 porte une crémaillère 37 comportant des crans en nombre égal à celui des plaquettes du second jeu, nombre qu'on supposera par la suite égal à seize. Ces seize crans sont prévus pour coopérer avec un cliquet 38 porté par le châssis 22 et dégageable manuellement. Ces crans permettent d'indexer les positions d'arrêt du chariot 29, lors de son déplacement vertical, dans chacune des positions correspondant à l'introduction d'une plaquette du second jeu. L'intervalle entre deux dents successives de la crémaillère 37 laisse au cliquet 38 un jeu qui est utilisé pour dégager et retirer l'ensemble d'introduction 26, comme on le verra plus loin.

Le côté droit 35 du cadre porte une barrette 39 munie d'une graduation placée de telle façon que le numéro qui apparaît face à un index 40 porté par le châssis corresponde au numéro d'ordre de la plaquette du second jeu à insérer. Dans le côté droit 35, sont également ménagés treize trous 41, faisant partie d'un système de verrouillage du chariot 29 en position, comme on le verra plus loin.

L'ensemble 25, destiné à assurer un positionnement fin des plaquettes 7a et à mettre les fentes de ces plaquettes au niveau approprié pour l'introduction d'une plaquette 7b, est montré schématiquement en figure 4. Il comprend un chariot 42 muni de tiges de quidage 43 pouvant coulisser dans des douilles à bille 44. Le chariot peut ainsi se déplacer entre les positions indiquées en trait plein et en trait mixte sur la figure 4. Dans la seconde position, un pion de verrouillage 46 qu'il porte s'engage dans un des trous 41 du chariot 29. Une poignée de commande 45 permet de déplacer manuellement le chariot.

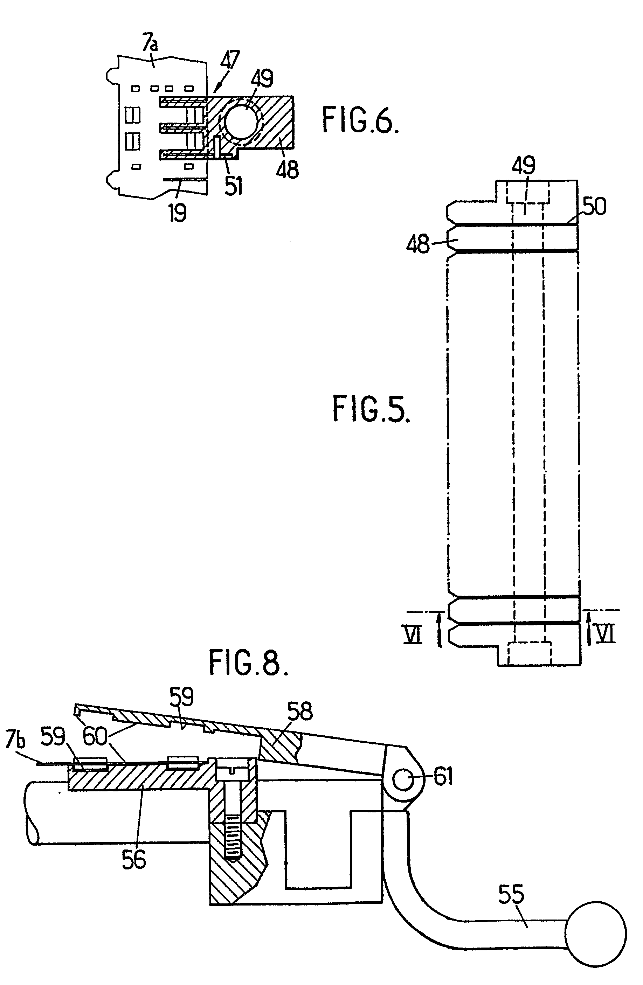

Le chariot porte un peigne 47, représenté en détail sur les figures 5 et 6 et constitué par un empilement de pièces de même section 48, fixé sur un axe 49. Entre les pièces sont placées des cales 50 d'épaisseur égale à l'épaisseur d'une plaquette 7a. Un couteau 51 lié aux pièces de guidage 48 s'engage, en fin de course du peigne 47, dans toutes les fentes 19 placées en regard, comme cela apparaît sur la figure 6 où un fragment de plaquette 7a a été représenté en traits fins. L'alignement ainsi réalisé facilite l'introduction d'une plaquette horizontale 7b dans les fentes 19 placées juste au-dessous du peigne.

On voit que l'ensemble 25, lorsqu'il est complètement enfoncé, assure plusieurs fonctions: il interdit tout déplacement vertical intempestif du chariot 29; il maintient l'écartement des plaquettes 7a les unes par rapport aux autres; il maintient les fentes 19 qui doivent recevoir une même plaquette 7b au même niveau vertical.

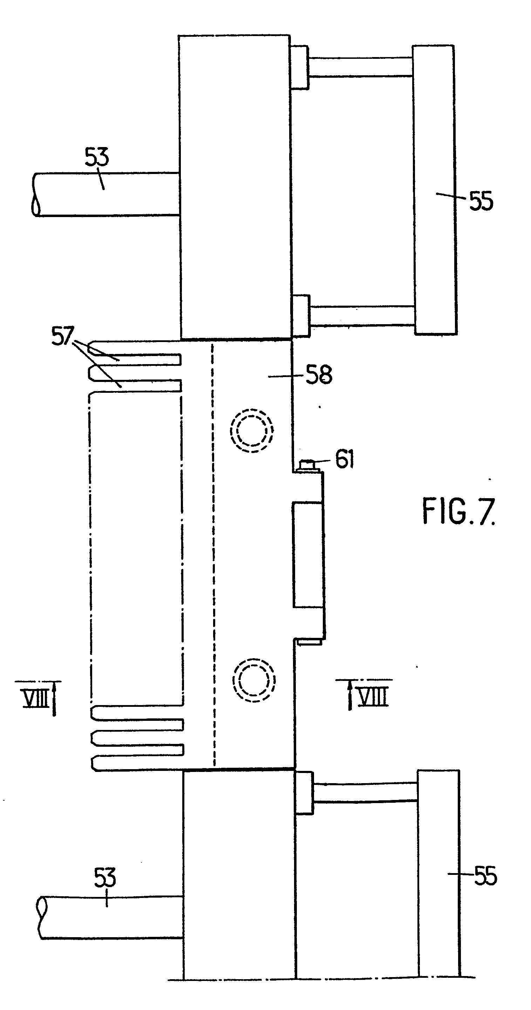

L'ensemble 26 d'introduction des plaquettes du second jeu comporte un équipage mobile dans le sens horizontal vers le cadre 28 et à partir du cadre dont l'élément support est un chariot 52 qui, comme le chariot 42, est muni de deux tiges 53 formant glissières, guidées par des douilles à billes 54. Les déplacements sont commandés à l'aide de poignées 55, montrées en figures 4 et 7. Sur le chariots 52 est fixée une table 56 munie d'un couvercle 58, comme on le voit mieux sur les figures 7 et 8. Le couvercle 58 est articulé autour d'un axe 61 porté par la table. Son ouverture et sa fermeture sont effectuées à l'aide d'un mécanisme commandé de nature quelconque appropriée, par exemple à l'aide d'une grenouillère schématisée en 62 sur la figure 4.

Les faces en regard de la table 56 et du couvercle 58 présentent des plages 60 alignées suivant un plan et destinées à s'appliquer contre les parties plates d'une plaquette 7b, séparées par des évidements 59 pour recevoir les portions en saillie de la plaquette, telles que les bossettes et ressorts. Dans la table 56 et le couvercle 58 sont ménagées des encoches 57 destinées à livrer passage aux plaquettes 7a lors du mouvement d'avancée du chariot 52.

La séquence d'assemblage des plaquettes internes d'une grille à l'aide du dispositif qui vient d'être décrit peut notamment être la suivante.

Les organes du dispositif étant dans la position représentée en trait plein en figure 4, l'opérateur commence par disposer successivement les seize plaquettes 7a, dans l'ordre où les lui présente la noria (non représentée). Chaque plaquette est disposée verticalement dans le cadre 28, en engageant ses parties terminales dans les fentes des côtés haut et bas 32, jusqu'à ce que la plaquette porte sur les butées 33. Une fois la «chaîne» verticale ainsi constituée, l'opérateur immobilise les plaquettes 7a à l'aide des barrettes 36.

La mise en place des plaquettes 7b peut alors commencer.

L'opérateur place la première plaquette 7b que lui présente la noria sur la table 56, puis referme le couvercle 58, ce qui immobilise la plaquette. L'opérateur dégage le cliquet élastique 38 du doigt 62 (figure 3) et descend le chariot 29 jusqu'à ce que le chiffre «1» apparaisse dans l'index 40. Dans cette position, le cliquet 38 s'engage entre les deux premières dents de la crémaillère 37 et retient le chariot en place, avec un léger jeu vertical. Toutes les plaquettes 7a présentent alors leur première fente 19 face au trajet d'introduction de la première plaquette 7b.

L'opérateur avance alors le chariot 42 de l'ensemble 25 dans la position montrée en trait mixte sur la figure 4. Les dents du peigne 47 positionnent de façon précise les plaquettes les unes par rapport aux autres, toutes les fentes étant au même niveau. En même temps, le pion 46 porté par le chariot 42 immobilise en position verticale le chariot 29 qui porte le cadre 28. Le chariot 52 de l'ensemble 26 est à son tour avancé dans la position montrée en trait mixte sur la figure 4, pour amener la première plaquette horzizontale 7b en butée dans les fentes 19 des plaquettes horizontales. Le chariot 42 porte-peigne est alors reculé, déverrouillant ainsi le chariot porte-cadre 29. Le couvercle 57 est déverrouillé et l'opérateur fait légèrement remonter le chariot 29, dans la limite autorisée par le cliquet 38, pour dégager la plaquette 7b, qui vient d'être insérée, des évidements 59. Le chariot 52 peut alors être retiré en vue de la mise en place d'une nouvelle plaquette 7b.

Cette même opération est répétée pour chacune des plaquettes à insérer. Toutefois, il est inutile d'avancer le chariot 42 de l'ensemble de positionnement fin des plaquettes lorsque ce chariot ne vient plus en prise, c'est-à-dire dans le cas illustré pour la mise en place des trois dernières plaquettes.

Ce défaut de centrage fin est sans inconvénient, étant donné que les plaquettes 7b déjà en place entretoisent et maintiennent de façon précise les plaquettes 7a à ce moment.

Une fois toutes les plaquettes intérieures 7a et 7b mises en place, l'assemblage ainsi constitué est transféré au poste de positionnement des plaquettes extérieures: l'assemblage est bloqué entre deux plaques par des moyens démontables, tels que vis et écrous. L'opérateur met la première plaquette extérieure sur le chant de l'assemblage de façon que les tenons pratiqués sur les extrémités des plaquettes intérieures s'insèrent dans des mortaises prévues dans la plaquette extérieure. Ces tenons peuvent éventuellement être ensuite vrillés afin que la liaison mécanique soit assurée. L'opération est répétée trois fois, chaque fois après une rotation de 90°.

La grille complète ainsi constituée doit être rendue monobloc, ce qui est en général effectué par soudage des plaquettes entre elles par tout processus approprié.

## Revendications

1. Procédé d'assemblage de grilles constituées de deux jeux de plaquettes similaires (7a, 7b), les plaquettes d'un des jeux étant disposées orthogonalement aux plaquettes de l'autre et comportant des fentes (19) coopérant avec des fentes complémentaires de l'autre jeu pour réaliser un assemblage à mi-fer, procédé suivant lequel on dispose le premier jeu dans un cadre (28) formant gabarit muni de fentes parallèles de réception de parties terminales des plaquettes du premier jeu, on déplace le gabarit (28) sur des moyens de guidage fixes pour l'amener dans une position pour laquelle toutes les plaquettes du premier jeu ont leur première fente disposée face à un trajet d'insertion de plaquette du second jeu, puis on insère une à une les plaquettes du second jeu, caractérisé en ce qu'on insère les plaquettes du second jeu (7b) par un équipage (52) d'insertion de plaquette mobile suivant un trajet orthogonal au sens de déplacement du gabarit et défini par des moyens de guidage (53, 54) fixes; on place une plaquette appropriée du second jeu (7b) sur ledit équipage mobile situé en position rétractée; on avance l'équipage mobile pour le faire pénétrer entre les plaquettes du premier jeu (7a) et engager à fond la plaquette du second jeu; on libère la plaquette du second jeu de l'équipage; on retire ce dernier et on recommence la séquence pour chaque plaquette du second jeu.

2. Procédé selon la revendication 1, caractérisé en ce que, avant d'avancer l'équipage (52) mobile, on immobilise le cadre formant gabarit et on effectue un positionnement fin des plaquettes les unes par rapport aux autres à l'aide d'un peigne (47) s'insérant entre les plaquettes du premier jeu.

3. Dispositif d'assemblage de grilles constituées de deux jeux de plaquettes similaires, les plaquettes d'un des jeux (7a) étant disposées orthogonalement aux plaquettes de l'autre jeu (7b) et comportant des fentes (19) coopérant avec des fentes complémentaires des plaquettes de l'autre jeu pour réaliser un assemblage à mi-fer, dispositif comprenant un châssis (22), un chariot (29) déplaçable sur le châssis suivant une première direction, avantageusement verticale, et un cadre (28) formant gabarit solidaire du chariot (29), caractérisé en ce qu'il comprend un équipage (52) déplaçable sur le châssis (22) dans une direction orthogonale à la direction de déplacement du chariot (29) et parallèle aux fentes (19) des plaquettes, équipage (52) comportant une table (56) munie de moyens de réception et de centrage d'une plaquette du second jeu (7b) et des moyens (42, 46) permettant de retenir le cadre (28) dans des positions successives prédéterminées pour lesquelles les fentes correspondantes des plaquettes du premier jeu (7a) font face au trajet de la plaquette du second jeu (7b) porté par l'équipage (52) mobile.

4. Dispositif selon la revendication 3, caractérisé en ce que les moyens permettant de retenir le cadre dans des positions déterminées comprennent un second chariot (42) déplaçable parallèlement audit équipage mobile, comportant un organe de verrouillage (46) placé de façon à venir s'engager dans des moyens coopérants solidaires du chariot porte-cadre (29) de façon à l'immobiliser et un peigne (47) venant s'engager entre les plaquettes (7a) du premier jeu de façon à maintenir l'écartement des plaquettes (7a) les unes par rapport aux autres et à maintenir les fentes (19) qui doivent recevoir une même plaquette (7b) du second jeu au même niveau.

5. Dispositif selon la revendication 4, caractérisé en ce que lesdits moyens comprennent de plus un cliquet porté par le châssis et coopérant avec une crémaillère (37) portée par le chariot porte-cadre (29).

6. Dispositif selon la revendication 3, 4 ou 5, caractérisé en ce que ledit équipage mobile comporte un chariot (52) muni d'une table (56) de réception et de centrage d'une plaquette du second jeu (7b), ladite table présentant des plages (60) destinées à s'appliquer contre les parties plates d'une plaquette (7b) et séparées par des évidements (59) destinés à recevoir les portions en saillie de la plaquette, les moyens de retenue du cadre étant prévus de façon à autoriser un déplacement relatif, par rapport à chacune des positions successives prédéterminées, d'amplitude suffisante pour dégager la plaquette (7b) du second jeu des évidements (59), après insertion, de façon à permettre de reculer l'équipage mobile.

7. Dispositif selon les revendications 5 et 6, caractérisé en ce que la crémaillère est prévue pour autoriser ledit déplacement d'amplitude suffisante, tandis que les moyens coopérants solidaires du second chariot (42) et du cadre sont prévus pour immobiliser totalement le chariot porte-cadre (29) par rapport au châssis (22).

8. Dispositif selon l'une quelconque des revendications 3 à 7, caractérisé en ce que le cadre et le châssis comportent des moyens d'affichage (39, 40) coopérant pour indiquer le numéro d'ordre de la plaquette du second jeu (7b) à insérer pour chacune des positions prédéterminées du chariot porte-cadre.

## Patentansprüche

1. Verfahren zum Zusammensetzen von Gittern, bestehend aus zwei Gruppen ähnlicher Platten (7a, 7b), wobei die Platten einer Gruppe orthogonal zu den Platten der anderen Gruppe angeordnet sind und Schlitze (19) aufweisen, die mit komplementären Schlitzen der anderen Gruppe zusammenwirken, um eine verkämmte Verbindung zu schaffen, wobei die erste Gruppe in einem Formrahmen (28) angeordnet wird, der mit parallelen Aufnahmeschlitzen für die Aufnahme der Endbereiche der Platten der ersten Gruppe versehen ist, wobei der Formrahmen (28) auf festen Führungsorganen verschoben wird, um ihn in eine Stellung zu bringen, in der sämtliche Platten der ersten Gruppe mit ihrem ersten Schlitz derart angeordnet sind, dass dieser einem Einführungsweg der Platten der zweiten Gruppe gegenüberliegt, wobei die Platten der zweiten Gruppe einer nach der anderen eingefügt werden, dadurch gekennzeichnet, dass die Einführung der Platten der zweiten Gruppe (7b) durch eine Einfügungsausrüstung (52) längs einem orthogonalen Weg bezüglich der Verschiebung des Formrahmens und durch ortsfeste Führungsorgane (53, 54) durchgeführt wird, eine geeignete Platte der zweiten Gruppe (7b) auf der mobilen Ausrüstung in zurückgezogener Stellung plaziert wird, die mobile Ausrüstung nach vorne bewegt wird, um die Platte der zweiten Gruppe zwischen die Platten der ersten Gruppe (7a) tief einzufügen, die Platte der zweiten Gruppe von der Ausrüstung losgelöst wird und schliesslich die Ausrüstung zurückgezogen wird und die Sequenz für jede Platte der zweiten Gruppe erneut begonnen wird.

2. Verfahren nach Anspruch 1, dadurch gekennzeichnet, dass bevor die mobile Ausrüstung (52) nach vorne bewegt wird, der Formrahmen festgelegt wird und eine Feinpositionierung der Platten zueinander mit Hilfe eines Kamms (47) durchgeführt wird, der zwischen die Platten der ersten Gruppe eingefügt wird.

3. Vorrichtung zum Zusammensetzen von Gittern bestehend aus zwei Gruppen ähnlicher Platten, wobei die Platten einer Gruppe (7a) orthogonal zu den Platten der anderen Gruppe (7b) angeordnet sind und Schlitze (19) aufweisen, die mit den komplentären Schlitzen der Platten der anderen Gruppe zusammenwirken, um eine verkämmte Verbindung zu schaffen, mit einem Gehäuse (22), einem auf dem Gehäuse längs einer ersten Richtung bewegbaren Wagen (29), wobei die erste Richtung vorzugsweise vertikal verläuft, und mit einem Rahmen (28), der ein mit dem Wagen (29) fest verbundenes Formstück bildet, gekennzeichnet durch eine auf dem Gehäuse (22) in einer zur Bewegungsrichtung des Wagens (29) orthogonalen Richtung, parallel zu den Schlitzen (19) der Platten bewegliche Ausrüstung (52), die einen Tisch (56) trägt, der mit Aufnahme- und Zentrierungsorganen für die Platten der zweiten Gruppe (7b) und mit Organen (42, 46) zum Entfernen des Rahmens (28) in vorbestimmten aufeinanderfolgenden Positionen versehen ist, für die die entsprechenden Schlitze der Platten der ersten Gruppe (7a) dem Weg der Platten der zweiten Gruppe (7b), die von der mobilen Ausrüstung (52) getragen sind, gegenüberliegen.

4. Vorrichtung nach Anspruch 3, dadurch gekennzeichnet, dass die Organe, die das Zurückziehen des Rahmens in vorbestimmte Positionen ermöglicht, einen zweiten Wagen (42) aufweisen, der parallel zu der mobilen Ausrüstung beweglich ist und ein Verriegelungsorgan (46) aufweist, das derart angeordnet ist, dass es in Mittel eingreift, die mit dem den Rahmen tragenden Wagen (29) fest verbunden sind, derart, dass ein Kamm (47) immobilisiert wird, der zwischen die Platten der ersten Gruppe (7a) eingreift, derart, dass er den Abstand der Platten (7a) untereinander aufrechterhält und die Schlitze (19), die ein und dieselbe Platte der zweiten Gruppe (7b) aufnehmen sollen, auf gleicher Höhe hält.

5. Vorrichtung nach Anspruch 4, dadurch gekennzeichnet, dass die Organe ausserdem eine vom Gehäuse getragene Sperrklinke aufweisen, die mit einer Zahnstange (37) zusammenwirken, die vom Rahmenträgerwagen (29) getragen wird.

6. Vorrichtung nach Anspruch 3, 4 oder 5, dadurch gekennzeichnet, dass die mobile Ausrüstung einen Wagen (52) trägt, der mit einem Tisch (56) zur Aufnahme und Zentrierung einer Platte der zweiten Gruppe (7b) versehen ist, wobei der Tisch Flächen (60) aufweist, die dazu bestimmt sind, gegen die flachen Bereiche einer Platte (7b) anzuliegen und die durch Ausnehmungen (59) voneinander getrennt sind, die dazu bestimmt sind, die vorstehenden Teile der Platte aufzunehmen, und Rückhalteorgane für den Rahmen derart vorgesehen sind, dass sie eine Relativbewegung bezüglich einer jeden der aufeinanderfolgenden vorbestimmten Positionen mit einer ausreichenden Amplitude ermöglicht, um die Platte der zweiten Gruppe (7b) aus den Ausnehmungen (59) nach deren Einführung zu lösen, derart, dass die mobile Ausrüstung zurückgezogen werden kann.

7. Vorrichtung nach den Ansprüchen 5 und 6, dadurch gekennzeichnet, dass die Zahnstange vorgesehen ist, um die Bewegung mit ausreichender Amplitude zu ermöglichen, während die am zweiten Wagen (42) befestigten entsprechenden zusammenwirkenden Organe, die ebenfalls mit dem Rahmen fest verbunden sind, vorgesehen sind, um den den Rahmen tragenden Wagen (29) gegenüber dem Gehäuse (22) vollkommen zu immobilisieren.

8. Vorrichtung nach einem der Ansprüche 3 bis 7, dadurch gekennzeichnet, dass der Rahmen und das Gehäuse Anzeigemittel (39, 40) aufweisen, die miteinander zusammenwirken, um die Nummer der einzuführenden Platte der zweiten Gruppe (7b) für jede vorbestimmte Stellung des den Rahmen tragenden Wagens anzuzeigen.

**Claims**

1. A process for assembling grills formed from two sets of similar strips (7a, 7b), the strips of one of the sets being disposed orthogonally to the strips of the other set and formed with slots (19) which co-act with complementary slots in the other set to effect a lap-jointing assembly, wherein the first set is located in a frame (28) which constitutes an assembly jig, formed with parallel slots for receiving end sections of the strips of the first set, the assembly jig (28) ist displaced on fixed guide means to bring it into a position in which all the strips of the first set have their first slots disposed facing an insertion path for a strip of the second set, then the strips of the second set are inserted one by one, characterized in that the strips of the second set (7b) are inserted by a strip insertion device (52) which is movable along a path orthogonal to the displacement direction of the assembly jig and defined by fixed guide means (53, 54); an appropriate strip of the second set (7b) is placed on said movable device then located in a retracted position; the movable device is moved forwardly to cause it to penetrate between the strips of the first set (7a) and to engage the strip of the second set completely; the strip of the second set is released from the device; the latter is withdrawn and the sequence is repeated for each strip of the second set.

2. Process according to claim 1, characterized in that, before advancing the movable device (52), the assembly jig is immobilised and fine mutual positioning of the strips relative to each other is effected by means of a comb (47) inserted between the strips of the first set.

3. Apparatus for assembling grills formed of two sets of similar strips, the strips of one of the sets (7a) being disposed orthogonally to the strips of the other set (7b) and formed with slots (19) which co-act with complementary slots in the strips of the other set to effect a lap-joined assembly, said apparatus comprising a sub-frame (22), a carriage (29) which can be displaced on the sub-frame in a first direction, preferably vertically and a frame (28) forming an assembly jig attached to the carriage (29), characterized in that it comprises a device (52) which can be moved over the sub-frame (22) in a direction which is orthogonal to the displacement direction of the carriage (29) and parallel to the slots (19) in the strips, said device (52) comprising a table (56) fitted with means for receiving and centring one strip from the second set (7b) and means (42, 46) for making it possible to hold the frame (28) in successive predetermined positions in which the corresponding slots of the strips of the first set (7a) are facing the path of the strip of the second set (7b) carried by the movable device (52).

4. Apparatus according to claim 3, characterized in that the means for holding the frame in predetermined positions comprise a second carriage (42) movable parallel to said movable device, comprising a locking element (46) positioned so as to engage into co-operating means attached to the frame bearing carriage (29) so as to immobilise it and a comb (47) which engages between the strips (7a) of the first set so as to maintain the mutual spacing between the strips (7a) and to hold the slots (19) which are to receive one and the same strip (7b) of the second set at the same level.

5. Apparatus according to claim 4, characterized in that said means further comprise a pawl mounted on the sub-frame and co-acting with a rack (37) mounted on the frame-bearing carriage (29).

6. Apparatus according to claim 3, 4 or 5, characterized in that the said movable device comprises a carriage (52) equipped with a table (56) for receiving and centring a strip of the second set, said table having areas (60) intended to rest against the flat parts of a strip (7b) and separated by recesses (59) intended to receive the projecting parts of the strip, said means for holding the frame being designed to allow an amount of relative displacement with regard to each of the successive predetermined positions which is sufficient to disengage the strip (7b) of the second set from the recesses (59), after it has been inserted, so as to allow the movable device to be withdrawn.

7. Apparatus according to claim 5 and 6, characterized in that the rack is designed to allow the said sufficient amount of displacement, while the co-acting means attached to the second carriage and to the frame are designed to immobilise the frame-bearing carriage (29) completely relative to the sub-frame (22).

8. Apparatus according to any one of claims 3–7, characterized in that the frame and the sub-frame comprise display means which co-act to indicate the serial number of the strip of the second set (7b) which should be inserted for each of the predetermined positions of the frame-bearing carriage.

# FIG.1.

# FIG.2.

FIG.3.

FIG.4.

FIG.6.

FIG.5.

FIG.8.

FIG.7.